(19) Europäisches Patentamt
European Patent Office
Office européen des brevets

(11) **EP 4 076 983 B1**

(12) **FASCICULE DE BREVET EUROPEEN**


(45) Date de publication et mention de la délivrance du brevet:
**07.02.2024 Bulletin 2024/06**

(21) Numéro de dépôt: **20842715.3**

(22) Date de dépôt: **09.12.2020**

(51) Classification Internationale des Brevets (IPC):
***B60C 1/00*** *(2006.01)* ***C08L 23/08*** *(2006.01)*
***B60C 11/00*** *(2006.01)*

(52) Classification Coopérative des Brevets (CPC):
(C-Sets disponibles)
**B60C 1/0016; B60C 11/0058; B60C 11/0066; B60C 11/0075; C08L 23/083** (Cont.)

(86) Numéro de dépôt international:
**PCT/FR2020/052353**

(87) Numéro de publication internationale:
**WO 2021/123567 (24.06.2021 Gazette 2021/25)**


(54) **PNEUMATIQUE AVEC UNE BANDE DE ROULEMENT COMPORTANT DES ELEMENTS DE RENFORCEMENT**

REIFEN MIT EINER LAUFFLÄCHE MIT VERSTÄRKUNGSELEMENTEN

TYRE WITH A TREAD COMPRISING REINFORCING ELEMENTS


(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.12.2019 FR 1914618**

(43) Date de publication de la demande:
**26.10.2022 Bulletin 2022/43**



(73) Titulaire: **COMPAGNIE GENERALE DES ETABLISSEMENTS MICHELIN**
**63040 Clermont-Ferrand (FR)**

(72) Inventeurs:
- **ARAUJO DA SILVA, José-Carlos**
  **63040 CLERMONT-FERRAND CEDEX 9 (FR)**
- **CROCHET, Aurore**
  **63040 CLERMONT-FERRAND CEDEX 9 (FR)**
- **GORNARD, Benjamin**
  **63040 CLERMONT-FERRAND CEDEX 9 (FR)**

(74) Mandataire: **M.F.P. Michelin**
**DCJ/PI - F35 - Ladoux**
**23 place des Carmes-Déchaux**
**63040 Clermont-Ferrand Cedex 9 (FR)**



(56) Documents cités:
**WO-A1-2018/002487 FR-A1- 3 059 943**



Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).





**(Cont. page suivante)**

(52) Classification Coopérative des Brevets (CPC):
(Cont.)

C-Sets
**C08L 23/083, C08L 91/00, C08L 91/06, C08K 3/36, C08K 5/548, C08K 3/04, C08K 3/22, C08K 5/09, C08K 3/06, C08K 5/31, C08K 5/47, C08K 5/18**

## Description

La présente invention est relative aux pneumatiques, en particulier aux pneumatiques pourvus d'une bande de roulement comprenant deux compositions distinctes.

De façon générale, un pneumatique est un objet ayant une géométrie de révolution par rapport à un axe de rotation. Un pneumatique comprend deux bourrelets destinés à être montés sur une jante. Il comprend également deux flancs reliés aux bourrelets, un sommet comportant une bande de roulement destinée à entrer en contact avec le sol, le sommet ayant un premier côté relié à l'extrémité radialement extérieure de l'un des deux flancs et ayant un deuxième côté relié à l'extrémité radialement extérieure de l'autre des deux flancs.

La constitution du pneumatique est usuellement décrite par une représentation de ses constituants dans un plan méridien, c'est-à-dire un plan contenant l'axe de rotation du pneumatique. Les directions radiale, axiale et circonférentielle désignent respectivement les directions perpendiculaire à l'axe de rotation du pneumatique, parallèle à l'axe de rotation du pneumatique et perpendiculaire à tout plan méridien. Dans ce qui suit, les expressions « radialement », « axialement » et « circonférentiellement » signifient respectivement « selon une direction radiale », « selon la direction axiale » et « selon une direction circonférentielle » du pneumatique. Les expressions « radialement intérieur, respectivement radialement extérieur » signifient « plus proche, respectivement plus éloigné, de l'axe de rotation du pneumatique, selon une direction radiale ». Le plan équatorial CP est un plan perpendiculaire à l'axe de révolution du pneumatique, positionné axialement de façon à couper la surface de la bande de roulement sensiblement à mi-distance des bourrelets. Les expressions « axialement intérieur, respectivement axialement extérieur » signifient « plus proche, respectivement plus éloigné, du plan équatorial du pneumatique, selon la direction axiale ».

Comme on le sait, les pneumatiques pour applications routières, et tout particulièrement les pneumatiques pour véhicules de tourisme, apportent une contribution essentielle aux performances des véhicules en matière de résistance ou roulement (et donc d'efficacité énergétique des véhicules), d'adhérence, de réponse dynamique pour le guidage des véhicules (notamment en virage) et d'usure (et donc de coût global d'utilisation des véhicules). Parmi les paramètres de conception des pneumatiques, l'homme du métier connait l'importance du choix du matériau constitutif de la bande de roulement et du matériau constitutif de la sous-couche. Un exemple de sous-couche, c'est-à-dire de couche de caoutchouc insérée entre l'armature de sommet et le matériau de la bande de roulement, est décrit dans le document FR 2 954 333. Pour apporter une amélioration de performances globales du pneumatique, les documents FR 3 010 002 et FR 3 043 017, par exemple, proposent un pneumatique dont la partie destinée à être utilisée comme bande de roulement comporte des matériaux différents. Le document WO2016/174100 propose quant à lui d'utiliser un mélange caoutchouteux de bande de roulement de faible dureté et de renforcer la bande de roulement en y incluant un ou plusieurs éléments de renforcement circonférentiels ayant une forme triangulaire, vue en coupe méridienne, ledit triangle ayant sa pointe orientée radialement vers l'extérieur. Le document WO2019/016440 propose de renforcer la bande de roulement en y incluant un ou plusieurs éléments de renforcement circonférentiels en combinaison avec une couche de recouvrement pour apporter une meilleure réponse dynamique en poussée de dérive sur sollicitation de braquage sans dégrader ni la résistance au roulement du pneumatique ni le bruit engendré par le pneumatique. Enfin, le document WO2018/002487 divulgue un pneumatique pour véhicule comportant une armature de sommet et une bande de roulement radialement extérieure ayant des renforcements circonférentiels permettant d'utiliser pleinement le potentiel d'adhérence de mélanges de bande de roulement de plus faible rigidité.

Pour améliorer le compromis de performances que sont la résistance au roulement et la réponse en poussée de dérive sur sollicitation de braquage du véhicule, on utilise un matériau peu hystérétique et qui permet de rigidifier la bande de roulement. Usuellement, les rigidités sont modestes pour ne pas trop s'opposer à la mise à plat de la bande de roulement du pneumatique dans l'aire de contact avec le sol. Cependant, plus la rigidité est faible, moins bonne est la réponse en poussée de dérive du pneumatique sur sollicitation de braquage du véhicule. Actuellement, même dans les variantes de rigidités les plus élevées, le module dynamique de cisaillement G* des matériaux de sous-couche ou de renforcement de la bande de roulement de l'art antérieur est en général très inférieur à 8 MPa, même lorsque l'on recherche les meilleures performances en comportement. Dans la présente, précisons que le module dynamique de cisaillement G* considéré est le module dynamique de cisaillement G* mesuré à 23°C, et sous une contrainte de cisaillement alterné à une fréquence de 10 Hz et à 5% de déformation.

L'invention a pour objectif d'apporter une meilleure réponse dynamique en poussée de dérive sur sollicitation de braquage sans pénaliser la résistance au roulement du pneumatique, voire en l'améliorant, en substituant 1e matériau des éléments circonférentiels de l'art antérieur par une composition de caoutchouc spécifique.

Ainsi l'invention a pour objet un pneumatique, ayant un côté extérieur et un côté intérieur, ledit pneumatique comprenant une armature de sommet et une bande de roulement radialement extérieure, ladite bande de roulement comprenant une pluralité de blocs de sculpture orientés au moins en partie circonférentiellement et une pluralité de rainures s'étendant au moins en partie circonférentiellement, chaque rainure circonférentielle étant délimitée par une face latérale axialement interne, par une face latérale axialement externe et par un fond de rainure, au moins un desdits blocs de sculpture comportant au moins un élément de renforcement circonférentiel constitué d'une composition ayant

un module dynamique de cisaillement G* au moins deux fois supérieur au module dynamique de cisaillement G* de la composition du reste des blocs de la bande de roulement, l'élément de renforcement circonférentiel ayant une largeur axiale qui diminue progressivement en se déplaçant radialement vers l'extérieur, ladite largeur axiale ayant une valeur maximale inférieure à 40% de la largeur axiale dudit bloc,

caractérisé en ce que la composition dudit élément de renforcement circonférentiel est à base d'au moins :

- plus de 50 pce d'un copolymère d'éthylène et d'un 1,3-diène, les unités éthylène dans le copolymère représentant plus de 50% en mole des unités monomères du copolymère,
- une charge renforçante, et
- un système de réticulation,

et présente un taux de dilution inférieur ou égal à 25%.

## I- DÉFINITIONS

Par l'expression « composition à base de », il faut entendre une composition comportant le mélange et/ou le produit de réaction in situ des différents constituants utilisés, certains de ces constituants pouvant réagir et/ou étant destinés à réagir entre eux, au moins partiellement, lors des différentes phases de fabrication de la composition ; la composition pouvant ainsi être à l'état totalement ou partiellement réticulé ou à l'état non-réticulé.

Par l'expression « partie en poids pour cent parties en poids d'élastomère » (ou pce), il faut entendre au sens de la présente invention, la partie, en masse pour cent parties en masse d'élastomère.

Dans la présente, sauf indication expresse différente, tous les pourcentages (%) indiqués sont des pourcentages (%) en masse.

D'autre part, tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de a jusqu'à b (c'est-à-dire incluant les bornes strictes a et b). Dans la présente, lorsqu'on désigne un intervalle de valeurs par l'expression « de a à b », on désigne également et préférentiellement l'intervalle représenté par l'expression « entre a et b ».

Lorsqu'on fait référence à un composé « majoritaire », on entend au sens de la présente invention, que ce composé est majoritaire parmi les composés du même type dans la composition, c'est-à-dire que c'est celui qui représente la plus grande quantité en masse parmi les composés du même type. Ainsi, par exemple, un élastomère majoritaire est l'élastomère représentant la plus grande masse par rapport à la masse totale des élastomères dans la composition. De la même manière, une charge dite majoritaire est celle représentant la plus grande masse parmi les charges de la composition. A titre d'exemple, dans un système comprenant un seul élastomère, celui-ci est majoritaire au sens de la présente invention ; et dans un système comprenant deux élastomères, l'élastomère majoritaire représente plus de la moitié de la masse des élastomères. Au contraire, un composé « minoritaire » est un composé qui ne représente pas la fraction massique la plus grande parmi les composés du même type. De préférence par majoritaire, on entend présent à plus de 50%, de préférence plus de 60%, 70%, 80%, 90%, et plus préférentiellement le composé « majoritaire » représente 100%.

La « sculpture » d'une bande de roulement est un système plus ou moins complexe d'éléments en relief séparés les uns des autres par des découpures. Les éléments en relief d'une sculpture peuvent être soit des nervures soit des blocs.

Une « nervure » (« rib » en anglais), est un élément en relief formé sur une bande de roulement et s'étend essentiellement selon la direction circonférentielle, cet élément étant délimité soit par deux découpures, soit par une découpure et un bord de la bande de roulement. Une nervure comprend deux parois latérales et une face de contact, cette dernière étant destinée à venir en contact avec la chaussée pendant le roulage. Cet élément s'étend dans la direction circonférentielle et fait le tour du pneumatique.

Un « bloc » (« tread block » en anglais), est un élément en relief formé sur une bande de roulement, cet élément étant délimité par une ou plusieurs découpures rectilignes, incurvées ou circulaires, et éventuellement par un bord de la bande de roulement. Un bloc comprenant également une face de contact, cette dernière étant destinée à venir en contact avec la chaussée pendant le roulage.

Les découpures (« cut out » en anglais) peuvent être soit des rainures, soit des incisions selon leur largeur, c'est-à-dire la distance entre les parois de matière qui les délimitent et leur fonctionnement lors du roulage. La largeur d'une rainure est typiquement au moins égale à 2 mm, alors que la largeur d'une incision est typiquement au plus égale à 2 mm. Lors du roulage du pneumatique, les parois de matière d'une rainure n'entrent pas en contact l'une avec l'autre, alors que les parois de matière d'une incision entrent en contact au moins en partie l'une avec l'autre.

Les composés comprenant du carbone mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges, etc.

Toutes les valeurs de température de transition vitreuse « Tg » décrite dans la présente sont mesurées de manière connue par DSC (Differential Scanning Calorimetry) selon la norme ASTM D3418 (1999).

## II- BREVE DESCRIPTION DES FIGURES

Les figures 1 à 7 montrent une coupe méridienne partielle et schématique de pneumatiques conformes à des modes de réalisation de l'invention.

La figure 8 montre en en coupe méridienne, des variantes de réalisation d'un élément de renforcement circonférentiel utilisables dans le cadre de l'invention.

## III- DESCRIPTION DE L'INVENTION

On voit à la figure 1 un pneumatique 1, ayant un côté extérieur E et un côté intérieur I, le pneumatique comprenant un sommet 2, deux flancs 3 reliés chacun à un bourrelet 4. Le sommet 2 est relié de chaque côté à l'extrémité radialement extérieure de chacun des deux flancs. Le sommet 2 comporte une bande de roulement 5. La figure 1 montre un plan équatorial CP, plan perpendiculaire à l'axe de rotation du pneumatique, situé à mi-distance des deux bourrelets 4 (montés sur jante) et passant par le milieu de l'armature de ceinture ; la figure 1 indique aussi, par des flèches disposées juste au-dessus de la bande de roulement 5, sur le plan équatorial CP, les directions axiale X, circonférentielle C et radiale Z.

Par convention, le côté extérieur E du pneumatique est la partie axialement externe du pneumatique destinée à être visible depuis l'extérieur du véhicule une fois monté et le côté intérieur I est la partie axialement externe du pneumatique orientée vers le châssis du véhicule une fois monté.

Chaque bourrelet comporte une tringle 40. Une nappe de carcasse 41 est enroulée autour de chaque tringle 40. La nappe de carcasse 41 est radiale et est, de manière connue en soi, constituée par des câbles ; dans ce cas de mise en oeuvre, il s'agit de câbles textiles ; ces câbles sont disposés sensiblement parallèlement les uns aux autres et s'étendant d'un bourrelet à l'autre de façon telle qu'ils forment un angle compris entre 80° et 90° avec le plan équatorial CP.

La bande de roulement 5 comprend une pluralité de blocs de sculpture 51. Deux blocs de sculpture 51 axialement adjacents sont séparés par une rainure 71, 72, 73, 74 s'étendant au moins en partie circonférentiellement. Chaque rainure circonférentielle 71, 72, 73, 74 est délimitée par une face latérale axialement interne 7i, par une face latérale axialement externe 7e et par un fond 7b de rainure.

Avantageusement, la bande de roulement comprend au moins trois, de préférence de trois à cinq blocs, blocs de sculpture 51 et par conséquent au moins deux, de préférence de deux à quatre, rainures 71, 72, 73, 74.

Le sommet 2 comporte une armature de sommet 6 comportant deux nappes de ceinture 62, 63 ; le sommet 2 comporte aussi une nappe de carcasse 41. De façon très classique, les nappes de ceinture 62, 63 sont formées par des câbles métalliques arrangés parallèlement entre eux. De façon bien connue, les éléments de renforcement que forment les câbles de la nappe de carcasse 41 et les câbles des nappes de ceinture 62, 63 sont orientés selon au moins trois directions différentes de façon à former une triangulation.

L'armature de sommet 6 pourrait aussi comporter une nappe de frettage constituée de renforts de frettage formé par des fibres organiques ou polyamide aromatique, formant, avec la direction circonférentielle un angle au plus égal à 5°. L'armature de sommet 6 pourrait aussi comporter d'autres renforts, orientés d'un angle plus proche de 90° ; la constitution de l'armature de sommet ne fait pas partie de l'invention et dans le présent mémoire, lorsque l'on fait référence à la surface radialement extérieure de l'armature de ceinture, on vise le niveau radialement le plus extérieur de la couche de fils ou câbles de renforcement radialement la plus à l'extérieur, y compris la fine couche de mélange de calandrage des fils ou câbles de renforcement s'il y a une telle couche.

L'un des blocs de sculpture 51 comporte aussi un élément de renforcement circonférentiel 52. Cet élément de renforcement circonférentiel 52 est constitué d'un mélange caoutchouteux de rigidité au moins deux fois supérieure à la rigidité du mélange caoutchouteux du reste des blocs de la bande de roulement. Avantageusement, la composition du reste des blocs de la bande de roulement de la bande de roulement a un module dynamique de cisaillement G* mesuré à 60°C à 10 Hz et sous une contrainte de cisaillement alternée de 0,7 MPa inférieur ou égal à 2,5 MPa, de préférence inférieur à 1,3 MPa, de préférence encore inférieur à 1,1 MPa. A titre d'exemple de composition du reste de la bande de roulement, on peut citer une composition comprenant 100 pce d'un SBR (avec 27% styrène, et en pourcentage de la partie butadiénique du copolymère 5% de butadiène -1,2, 15% de cis-1,4, 80% de trans -1,4 ; Tg -48°C), 100 pce de silice « Zeosil 1165MP » de la société Solvay, 9 pce de silane TESPT « SI69 » de la société Evonik, 20 pce d'huile TDAE « Flexon 630 » de la société Shell, 50 pce de résine « Escorez 2173 » de la société Exxon, 5 pce de noir de

carbone et 12 pce d'additifs (système de protection et de vulcanisation) habituellement utilisés dans des compositions de bandes de roulement.

La composition de l'élément de renforcement circonférentiel 52 sera décrite plus en détail ci-après.

L'élément de renforcement circonférentiel 52 s'étend radialement de la surface radialement extérieure de ladite armature de sommet 6 vers la surface de ladite bande de roulement avec une largeur axiale qui diminue progressivement en se déplaçant radialement vers l'extérieur et au maximum sur une hauteur « h » correspondant à 75% de l'épaisseur « p » de la bande de roulement. L'épaisseur « p » de la bande de roulement est mesurée radialement entre l'extrémité radialement extérieure de l'armature de sommet 6 et la surface de contact avec le sol de la bande de roulement 5.

L'élément de renforcement circonférentiel 52 est de largeur axiale ayant une valeur maximale 520, au niveau de la jonction avec l'armature de sommet 6, inférieure à 30% de la largeur axiale 510 dudit bloc, mesurée où les parois latérales de rainure rencontrent le fond de rainure. On consultera en particulier la figure 1.

L'élément de renforcement circonférentiel 52 s'oppose au basculement et au cisaillement de la nervure formée par le bloc 51 pourvu d'un tel élément de renforcement circonférentiel 52. De préférence, la majorité des blocs ou l'ensemble des blocs 51 est pourvu d'au moins un élément de renforcement circonférentiel 52 comme montré aux figures 3 à 7.

De manière particulièrement avantageuse, l'élément de renforcement circonférentiel 52 forme au moins en partie la face latérale axialement interne 7i ou une face radialement externe 7e dudit au moins un desdits blocs de sculpture 51. En d'autres termes, avantageusement, au moins une partie de face radialement interne ou externe d'au moins une rainure 71, 72, 73, 74 est constituée par un élément de renforcement circonférentiel 52.

Les figures 2 à 6 illustrent des exemples de mise en oeuvre de l'invention dans lesquels un recouvrement 51a, réalisé par le même mélange caoutchouteux que le reste des blocs de la bande de roulement, est interposé axialement entre rainure 71 et élément de renforcement circonférentiel 52. En consultant en particulier la figure 3, on voit que ledit recouvrement 51a s'étend axialement sur une largeur axiale « A » comprise préférentiellement entre 4 % et 15 % de la largeur axiale 510 dudit bloc; le recouvrement 51a et la largeur axiale A ne sont pas identifiés à tous les endroits de la figure 3 où il y a un renforcement circonférentiel 52 pour ne pas surcharger cette figure, de même que cet aspect n'est pas systématique identifié par ces références sur les autres figures mais soulignons le caractère générique de cet aspect, valable pour tous les modes de réalisation de l'invention présentés dans les figures 2 à 6.

Quant à la hauteur radiale de l'élément de renforcement circonférentiel 52, à la figure 1 et 2, on voit qu'elle ne peut avantageusement pas être inférieure à 50% de l'épaisseur « p » de la bande de roulement, ladite largeur axiale ayant une valeur nulle à la position radiale la plus élevée, formant une sorte de pointe enfouie dans l'épaisseur du renforcement circonférentiel 52. Cela permet déjà d'obtenir un effet de renforcement significatif, tout en laissant en contact avec la chaussée seulement le mélange caoutchouteux de rigidité la plus basse jusqu'à mi-usure du pneumatique. Avantageusement, l'élément de renforcement circonférentiel 52 s'étend radialement sur une hauteur « h » correspondant de 50% à 100%, de préférence de 50 à 75% de l'épaisseur « p » de la bande de roulement 5. Cependant, comme sur les figures 3 et 4, la hauteur radiale de l'élément de renforcement circonférentiel 52 peut correspondre à 100% de l'épaisseur « p » de la bande de roulement, ladite largeur axiale ayant une valeur nulle à la position radiale correspondant à la surface de contact avec le sol à l'état neuf du pneumatique ; bien entendu, l'homme du métier pourra aisément ajuster les performances du pneumatique en adoptant pour la hauteur radiale toutes les valeurs intermédiaires entre les valeurs indiquées ci-dessus.

Les figures 4, 6 et 7 illustrent des exemples de mise en oeuvre de l'invention dans lesquels la bande de roulement 2 comporte une couche radialement intérieure 8. Cette une couche radialement intérieure 8 de la bande de roulement peut être interposée entre l'armature de sommet 6 et lesdits blocs 51. Elle peut ne pas être interposée entre l'armature de sommet 6 et les élément de renforcement circonférentiel 52 comme illustré par la figure 4, ou bien elle peut être interposée entre l'armature de sommet 6 et lesdits blocs 51 et aussi entre l'armature de sommet 6 et chaque élément de renforcement circonférentiel 52 desdits blocs 51 comme illustré aux figures 6 et 7. Ainsi, la surface radialement intérieure de l'élément de renforcement circonférentiel 52 peut être disposée au contact de la surface radialement extérieure de l'armature de sommet 6. Toutefois, de manière particulièrement avantageuse, l'élément de renforcement circonférentiel 52 est situé au sein de la bande de roulement 5, c'est-à-dire pas en contact avec la surface radialement extérieure de l'armature de sommet 6, par exemple au contact de la surface radialement extérieure ou au sein d'une couche radialement intérieure (8) de la bande de roulement.

La forme des éléments de renforcement circonférentiel présentés dans les figures 1 à 7 est triangulaire, mais cette forme peut varier et les parois latérales peuvent être concaves, convexes ou en escaliers notamment sans sortir du cadre de cet invention. La figure 8 dans laquelle, pour référence, un élément de renforcement circonférentiel 528a vu en coupe méridienne présente une forme en triangle telle qu'employé dans toutes les illustrations précédentes, les parois latérales vues en coupe méridienne étant donc des droites. Dans une variante formée par l'élément de renforcement circonférentiel 528b, la coupe méridienne de celui-ci est un trapèze, les parois latérales vues en coupe méridienne étant aussi des droites ; la limite radialement extérieure de cet élément de renforcement circonférentiel 528b est aussi une droite et, par exemple, celle-ci peut affleurer à la surface de la bande de roulement. Dans une variante formée par

l'élément de renforcement circonférentiel 528c, les parois latérales vues en coupe méridienne sont des segments de droite, l'angle angle α' que forme chacun de ces segments avec la direction radiale variant d'un segment au suivant (diminuant en allant radialement vers l'extérieur sur la figure). Dans une variante formée par l'élément de renforcement circonférentiel 528d, les parois latérales vues en coupe méridienne sont courbes, convexes ; elles pourraient être concaves. Dans une variante formée par l'élément de renforcement circonférentiel 528e, les parois latérales vues en coupe méridienne forment des escaliers. Ces variations de forme de la coupe méridienne peuvent être utilisées avec toutes les modes de réalisation précédemment décrits. Les formes des éléments de renforcement circonférentiel 52 sont, de manière non limitative, de préférence axialement symétriques pour limiter les poussées parasites lors de la mise à plat mais les formes du renforcement peuvent également être asymétriques de manière à lutter contre les dits efforts parasites. Par ailleurs, avantageusement, l'angle α que forment les deux parois latérales du ou des éléments de renforcement circonférentiels est compris entre 10 et 50 degrés, de préférence entre 35 et 45 degrés. Lorsque les parois latérales du ou des éléments de renforcement circonférentiels ne sont pas des droites, l'angle α est considéré par rapport à la droite imaginaire partant des extrémités axiales de la base de l'élément de renforcement circonférentiel à l'extrémité (ou, les cas échéant, aux extrémités axiales adjacentes) du sommet de l'élément de renforcement circonférentiel.

Selon un mode de réalisation particulièrement préféré de l'invention, présenté à la figure 7, on voit également une base prolongée 610 s'étendant axialement depuis un élément de renforcement circonférentiel 52. Sur cette figure, la base prolongée 610 est disposée radialement sur une couche radialement intérieure 8 et radialement à l'intérieur de la bande de roulement 5. Toutefois, la base prolongée 610 peut également être située sur la surface radialement extérieure de l'armature de sommet 6. De part et d'autre, axialement, de chacune des rainures 71, 72, 73, 74, on trouve un élément de renforcement circonférentiel 52 en forme de coin (vu en coupe méridienne). Cet élément de renforcement circonférentiel 52 s'étend radialement de la surface radialement extérieure de la couche radialement intérieure 8 de la bande de roulement vers l'extérieur de la bande de roulement 5 jusqu'à une hauteur radiale supérieure à 75% de l'épaisseur radiale de la bande de roulement. Notons que la base prolongée 610 s'étend préférentiellement axialement d'un élément de renforcement circonférentiel 52 à l'autre pour ceux des blocs de sculpture compris entre deux rainures 71, 72, 73, 74, et s'étend axialement d'un élément de renforcement circonférentiel 52 vers l'épaule 2. De préférence également, la base prolongée 610 recouvre sensiblement en totalité une couche radialement intérieure 8 de la bande de roulement, pour les blocs de sculpture situés aux extrémités axiales de la bande de roulement.

Avantageusement, le pneumatique comprenant au moins deux éléments de renforcement circonférentiels 52, et une base prolongée 610 disposée radialement sur une couche radialement intérieure 8 de la bande de roulement interposée entre l'armature de sommet 6 et lesdits blocs 51, et axialement recouvrant la couche radialement intérieure 8 de la bande de roulement entre deux éléments de renforcement circonférentiels 52. De préférence, la base prolongée 610 lie deux éléments de renforcement circonférentiels 52 en dehors des rainures 71, 72, 73, 74. Toutefois, elle pourrait également lier deux éléments de renforcement circonférentiels 52 en passant sous les rainures 71, 72, 73, 74. Par ailleurs, la base prolongée 610 peut également être disposée radialement sur une couche radialement intérieure 8 de la bande de roulement interposée entre l'armature de sommet 6 et lesdits blocs 51, et axialement recouvrant la couche radialement intérieure 8 de la bande de roulement entre un élément renforçant 52 et l'épaule 2.

Avantageusement, chaque élément de renforcement circonférentiel 52 est constitué de la même composition. En outre, lorsque la bande de roulement comprend une base prolongée 610, la base prolongée 610 est avantageusement constituée de la même composition que les éléments de renforcement circonférentiels 52, ce qui permet de les extruder en une seule et même opération avec la base prolongée 610.

Selon l'invention, la composition de l'élément de renforcement circonférentiel 52 est à base d'au moins (i) plus de 50 pce d'un copolymère d'éthylène et d'un 1,3-diène, les unités éthylène dans le copolymère représentant plus de 50% en mole des unités monomères du copolymère, (ii) une charge renforçante, et (iii) un système de réticulation ; et présente un taux de dilution inférieure ou égale à 25%.

Le copolymère d'éthylène et de 1,3-diène utile aux besoins de l'invention, est un élastomère de préférence statistique, qui comprend des unités éthylène résultant de la polymérisation d'éthylène. De manière connue, l'expression « unité éthylène » fait référence au motif $-(CH_2-CH_2)-$ résultant de l'insertion de l'éthylène dans la chaîne élastomère.

Dans le copolymère d'éthylène et de 1,3-diène, les unités éthylène représentent plus de 50% en mole des unités monomères du copolymère. De préférence, les unités éthylène dans le copolymère représentent entre 50% et 95% en moles des unités monomères du copolymère, c'est-à-dire entre 50% et 95% en moles des unités éthylène et des unités du 1,3-diène. De manière très préférentielle, le copolymère contient des unités éthylène qui représentent au moins 60% en mole, de préférence au moins 70% en mole, des unités monomères du copolymère. De manière très préférentielle également, le copolymère contient des unités éthylène qui représentent au plus 90% en mole, de préférence au plus 85% en mole, des unités monomères du copolymère.

Le copolymère d'éthylène et de 1,3-diène comprend également des unités 1,3-diène résultant de la polymérisation d'un 1,3-diène. De manière connue, l'expression « unité 1,3-diène » fait référence aux unités résultant de l'insertion du 1,3-diène par une addition 1,4, une addition 1,2 ou une addition 3,4 dans le cas de l'isoprène. Les unités 1,3-diène sont celles par exemple d'un 1,3-diène ou d'un mélange de 1,3-diènes, le ou les 1,3-diènes ayant 4 à 12 atomes de

carbone, tels que tout particulièrement le 1,3-butadiène et l'isoprène. De préférence, le 1,3-diène est le 1,3-butadiène.

Le copolymère d'éthylène et d'un 1,3-diène, contient avantageusement des unités de formule (I) et/ou (II). La présence de motif cyclique saturé à 6 membres, 1,2-cyclohexanediyle, de formule (I) comme unité monomère dans le copolymère peut résulter d'une série d'insertions très particulières de l'éthylène et du 1,3-butadiène dans la chaîne polymère au cours de sa croissance.

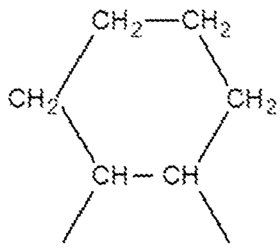

(I)

$-CH_2-CH(CH=CH_2)-$ (II)

Par exemple, le copolymère d'éthylène et d'un 1,3-diène peut être dépourvu d'unités de formule (I). Dans ce cas, il contient de préférence des unités de formule (II).

Lorsque le copolymère d'éthylène et d'un 1,3-diène comprend des unités de formule (I) ou des unités de formule (II) ou encore des unités de formule (I) et des unités de formule (II), les pourcentages molaires des unités de formule (I) et des unités de formule (II) dans l'élastomère diénique fortement saturé, respectivement o et p, satisfont de préférence à l'équation suivante (eq. 1), de manière plus préférentielle à l'équation (eq. 2), o et p étant calculés sur la base de l'ensemble des unités monomères de l'élastomère diénique fortement saturé.

$$0 < o+p \leq 25 \qquad \text{(eq. 1)}$$

$$0 < o+p < 20 \qquad \text{(eq. 2)}$$

Selon l'invention, le copolymère, de préférence le copolymère d'éthylène et d'un 1,3-diène (de préférence de 1,3-butadiène), est un copolymère statistique.

Le copolymère d'éthylène et d'un 1,3-diène peut être obtenu selon différentes méthodes de synthèses connues de l'homme du métier, notamment en fonction de la microstructure visée de l'élastomère diénique fortement saturé. Généralement, il peut être préparé par copolymérisation au moins d'un diène, de préférence d'un 1,3-diène, de préférence encore le 1,3-butadiène, et d'éthylène et selon des méthodes de synthèse connues, en particulier en présence d'un système catalytique comprenant un complexe métallocène. On peut citer à ce titre les systèmes catalytiques à base de complexes métallocènes, lesquels systèmes catalytiques sont décrits dans les documents EP 1 092 731, WO 2004035639, WO 2007054223 et WO 2007054224 au nom de la Demanderesse. Le copolymère, y compris lorsqu'il est statistique, peut être préparé aussi par un procédé utilisant un système catalytique de type préformé comme ceux décrits dans les documents WO 2017093654 A1, WO 2018020122 A1 et WO 2018020123 A1.

Le copolymère peut être constitué d'un mélange de copolymères contenant des unités éthylène et des unités diéniques qui se différencient des uns des autres par leurs microstructures et/ou par leurs macrostructures.

Le taux du copolymère d'éthylène et de 1,3-diène dans la composition de l'élément de renforcement circonférentiel 52 est préférentiellement compris dans un domaine allant de 60 à 100 pce, de préférence de 80 à 100 pce. De préférence, le copolymère d'éthylène et de 1,3-diène est le seul élastomère de la composition, c'est-à-dire que son taux est de 100 pce.

La composition de l'élément de renforcement circonférentiel 52 conforme à l'invention comprend également une charge renforçante, connue pour ses capacités à renforcer une composition de caoutchouc utilisable pour la fabrication de bandages pneumatiques ou non-pneumatiques.

La charge renforçante peut comprendre du noir de carbone, de la silice ou un de leurs mélanges. Avantageusement, la charge renforçante comprend majoritairement de la silice. De préférence encore, la charge renforçante comprend plus de 70% en poids de silice, de préférence entre 70% et 95% en poids de silice.

On peut utiliser tout type de silice, notamment des silices précipitées hautement dispersibles (dites « HDS » pour « highly dispersible » ou « highly dispersible silica »). Ces silices précipitées, hautement dispersibles ou non, sont

bien connues de l'homme du métier. On peut citer, par exemple, les silices décrites dans les demandes WO03/016215-A1 et WO03/016387-A1. Parmi les silices HDS commerciales, on peut notamment utiliser les silices « Ultrasil® 5000GR », « Ultrasil ® 7000GR » de la société Evonik, les silices « Zeosil ® 1085GR», « Zeosil® 1115 MP », « Zeosil® 1165MP », «Zeosil® Premium 200MP », «Zeosil® HRS 1200 MP » de la Société Solvay. À titre de silice non HDS, les silices commerciales suivantes peuvent être utilisées : les silices « Ultrasil ® VN2GR », « Ultrasil ® VN3GR » de la société Evonik, la silice «Zeosil® 175GR » » de la société Solvay, les silices « Hi-Sil EZ120G(-D) », « Hi-Sil EZ160G(-D) », « Hi-Sil EZ200G(-D) », « Hi-Sil 243LD », « Hi-Sil 210 », « Hi-Sil HDP 320G » de la société PPG.

Pour coupler la silice à l'élastomère diénique, on utilise de manière bien connue un agent de couplage (ou agent de liaison) au moins bifonctionnel destiné à assurer une connexion suffisante, de nature chimique et/ou physique, entre la charge inorganique (surface de ses particules) et l'élastomère diénique. On utilise en particulier des organosilanes ou des polyorganosiloxanes au moins bifonctionnels. Par « bifonctionnel », on entend un composé possédant un premier groupe fonctionnel capable d'interagir avec la charge inorganique et un second groupe fonctionnel capable d'interagir avec l'élastomère diénique. Par exemple, un tel composé bifonctionnel peut comprendre un premier groupe fonctionnel comprenant un atome de silicium, le dit premier groupe fonctionnel étant apte à interagir avec les groupes hydroxyles d'une charge inorganique et un second groupe fonctionnel comprenant un atome de soufre, le dit second groupe fonctionnel étant apte à interagir avec l'élastomère diénique.

Préférentiellement, les organosilanes sont choisis dans le groupe constitué par les organosilanes polysulfurés (symétriques ou asymétriques) tels que le tétrasulfure de bis(3-triéthoxysilylpropyl), en abrégé TESPT commercialisé sous la dénomination « Si69 » par la société Evonik ou le disulfure de bis-(triéthoxysilylpropyle), en abrégé TESPD commercialisé sous la dénomination « Si75 » par la société Evonik, les polyorganosiloxanes, les mercaptosilanes, les mercaptosilanes bloqués, tels que l'octanethioate de S-(3-(triéthoxysilyl)propyle) commercialisé par la société Momentive sous la dénomination « NXT Silane ». Plus préférentiellement, l'organosilane est un organosilane polysulfuré.

La teneur en agent de couplage dans la composition de l'invention peut aisément être ajustée par l'homme du métier. Typiquement le taux d'agent de couplage représente de 0,5% à 15% en poids par rapport à la quantité de charge inorganique renforçante.

Lorsqu'un noir de carbone est utilisé, peuvent convenir tous les noirs de carbone, notamment les noirs conventionnellement utilisés dans les pneumatiques ou leurs bandes de roulement. Parmi ces derniers, on citera plus particulièrement les noirs de carbone renforçants des séries 100, 200, 300, ou les noirs de série 500, 600 ou 700 (grades ASTM D-1765-2017), comme par exemple les noirs N115, N134, N234, N326, N330, N339, N347, N375, N550, N683, N772). Ces noirs de carbone peuvent être utilisés à l'état isolé, tels que disponibles commercialement, ou sous tout autre forme, par exemple comme support de certains des additifs de caoutchouterie utilisés. Les noirs de carbone pourraient être par exemple déjà incorporés à l'élastomère diénique, notamment isoprénique sous la forme d'un masterbatch (voir par exemple demandes WO97/36724-A2 ou WO99/16600-A1).

Avantageusement, le taux de charge renforçante dans la composition dudit élément de renforcement circonférentiel 52 est compris dans un domaine allant de 70 à 120 pce, de préférence de 80 à 110 pce.

Avantageusement, la fraction volumique de charge renforçante dans la composition dudit élément de renforcement circonférentiel 52 est supérieure ou égale à 23%, de préférence comprise entre 23% et 33% de préférence entre 25% et 31%. Ces fractions volumiques de charge préférentielle permettent d'améliorer davantage le compromis rigidité hystérèse des éléments de renforcement circonférentiels 52.

La fraction volumique de charge renforçante dans une composition de caoutchouc est définie comme étant le rapport du volume de la charge renforçante sur le volume de l'ensemble des constituants de la composition, étant entendu que le volume de l'ensemble des constituants est calculé par en additionnant le volume de chacun des constituants de la composition.

Le système de réticulation dudit élément de renforcement circonférentiel 52 peut être tout type de système connu de l'homme de l'art dans le domaine des compositions de caoutchouc pour pneumatique. Il peut notamment être à base de soufre, et/ou de peroxyde et/ou de bismaléimides.

De manière préférentielle, le système de réticulation est à base de soufre, on parle alors d'un système de vulcanisation. Le soufre peut être apporté sous toute forme, notamment sous forme de soufre moléculaire et/ou d'agent donneur de soufre. Au moins un accélérateur de vulcanisation est également préférentiellement présent, et, de manière optionnelle, préférentielle également, on peut utiliser divers activateurs de vulcanisation connus tels qu'oxyde de zinc, acide stéarique ou composé équivalent tels que les sels d'acide stéarique et sels de métaux de transition, dérivés guanidiques (en particulier diphénylguanidine), ou encore des retardateurs de vulcanisation connus.

Le soufre est utilisé, dans la composition dudit élément de renforcement circonférentiel 52, à un taux préférentiel compris entre 0.3 pce et 10 pce, plus préférentiellement entre 0.3 et 5 pce. L'accélérateur primaire de vulcanisation est utilisé, dans la composition dudit élément de renforcement circonférentiel 52, à un taux préférentiel compris entre 0.5 et 10 pce, plus préférentiellement compris entre 0.5 et 5 pce.

On peut utiliser comme accélérateur tout composé susceptible d'agir comme accélérateur de vulcanisation des élastomères diéniques en présence de soufre, notamment des accélérateurs du type thiazoles ainsi que leurs

dérivés, des accélérateurs de types sulfénamides, thiurames, dithiocarbamates, dithiophosphates, thiourées et xanthates. A titre d'exemples de tels accélérateurs, on peut citer notamment les composés suivants : disulfure de 2-mercaptobenzothiazyle (en abrégé MBTS), N-cyclohexyl-2-benzothiazyle sulfénamide (CBS), N,N-dicyclohexyl-2-benzothiazyle sulfénamide (DCBS), N-ter-butyl-2-benzothiazyle sulfénamide (TBBS), N-ter-butyl-2-benzothiazyle sulfénimide (TBSI), disulfure de tetrabenzylthiurame (TBZTD), dibenzyldithiocarbamate de zinc (ZBEC) et les mélanges de ces composés.

Bien que cela ne soit pas nécessaire pour la mise en oeuvre de l'invention, la composition dudit élément de renforcement circonférentiel 52 peut comprendre un plastifiant.

De manière connue de l'homme de l'art des compositions de caoutchouc pour pneumatique, ce plastifiant est de préférence choisi parmi les résines hydrocarbonées de haute température de transition vitreuse (Tg), les résines hydrocarbonées de faible Tg, les huiles plastifiantes, et leurs mélanges. De préférence, le plastifiant est choisi parmi les résines hydrocarbonées de haute Tg, les huiles plastifiantes, et leurs mélanges.

Comme indiqué précédemment, le taux de dilution de la composition dudit élément de renforcement circonférentiel 52 est inférieur ou égal à 25%. Avantageusement, ce taux est compris dans un domaine allant de 0% à 25% de préférence de 4% à 15%.

On entend par taux de dilution le rapport de la masse de plastifiant sur la somme des masses de plastifiant et de la matrice élastomère. Par « masse du plastifiant », on entend la masse de l'ensemble des plastifiants de la composition, c'est-à-dire de l'ensemble des résines hydrocarbonées de haute température de transition vitreuse (Tg), des résines hydrocarbonées de faible Tg, des huiles plastifiantes, et de leurs mélanges. Par « matrice élastomère », on entend l'ensemble des élastomères de la composition.

De préférence, la composition dudit élément de renforcement circonférentiel 52 ne comprend pas de résine plastifiante hydrocarbonée (de haute ou de faible Tg) ou en comprend moins de 19 pce, de préférence moins de 15 pce, de préférence encore moins de 10 pce. De préférence encore, la composition dudit élément de renforcement circonférentiel 52 ne comprend pas du tout de résine plastifiante hydrocarbonée.

Avantageusement également, la composition dudit élément de renforcement circonférentiel 52 ne comprend pas d'huile plastifiante liquide à 20°C ou en comprend moins de 33 pce, de préférence moins de 15 pce.

Toutefois, l'utilisation d'huile plastifiante peut s'avérer utile pour faciliter la préparation et la mise en oeuvre de l'élément de renforcement circonférentiel 52. Ainsi, préférentiellement, lequel la composition dudit élément de renforcement circonférentiel (52) comprend de 0 à 25 pce, de préférence de 5 à moins de 15 pce d'au moins une huile plastifiante liquide à 20°C.

Toute huile plastifiante liquide à 20°C, qu'elle soit de nature aromatique ou non-aromatique connue pour ses propriétés plastifiantes vis-à-vis d'élastomères, est utilisable. A température ambiante (20°C), ces huiles, plus ou moins visqueuses, sont des liquides (c'est-à-dire, pour rappel, des substances ayant la capacité de prendre à terme la forme de leur contenant), par différence notamment avec les résines hydrocarbonées de haute Tg qui sont par nature solides à température ambiante. L'huile plastifiante liquide présente une avantageusement une Tg inférieure à -20 °C, de préférence inférieure à -40 °C.

Conviennent particulièrement les huiles plastifiantes choisies dans le groupe constitué par les huiles naphténiques (à basse ou haute viscosité, notamment hydrogénées ou non), les huiles paraffiniques, les huiles MES (Medium Extracted Solvates), les huiles TDAE (Treated Distillate Aromatic Extracts), les huiles RAE (Residual Aromatic Extract oils), les huiles TRAE (Treated Residual Aromatic Extract) et les huiles SRAE (Safety Residual Aromatic Extract oils), les huiles minérales, les huiles végétales, les plastifiants éthers, les plastifiants esters, les plastifiants phosphates, les plastifiants sulfonates et les mélanges de ces composés. De préférence, l'huile plastifiante liquide à 20°C est choisie dans le groupe constitué par les huiles paraffiniques, les huiles MES

(Medium Extracted Solvates), les huiles TDAE (Treated Distillate Aromatic Extracts), les huiles végétales et leurs mélanges, de préférence parmi les huiles paraffiniques.

La composition de l'élément de renforcement circonférentiel 52 peut comporter optionnellement également tout ou partie des additifs usuels habituellement utilisés dans les compositions d'élastomères pour pneumatique, comme par exemple des pigments, des agents de protection tels que cires anti-ozone, anti-ozonants chimiques, antioxydants, des agents anti-fatigue, des résines renforçantes (telles que décrites par exemple dans la demande WO 02/10269). Avantageusement, la composition de l'élément de renforcement circonférentiel 52 ne comprend pas de résine renforçante.

Les compositions de caoutchouc utilisables dans le cadre de la présente invention peuvent être fabriquées dans des mélangeurs appropriés, en utilisant deux phases de préparation successives bien connues de l'homme du métier :

- une première phase de travail ou malaxage thermomécanique (phase dite « non-productive »), qui peut être conduite en une seule étape thermomécanique au cours de laquelle on introduit, dans un mélangeur approprié tel qu'un mélangeur interne usuel (par exemple de type 'Banbury'), tous les constituants nécessaires, notamment la matrice

élastomérique, la charge renforçante, les éventuels autres additifs divers, à l'exception du système de réticulation. L'incorporation de la charge éventuelle à l'élastomère peut être réalisée en une ou plusieurs fois en malaxant thermomécaniquement. Dans le cas où la charge est déjà incorporée en totalité ou en partie à l'élastomère sous la forme d'un mélange-maître (« masterbatch » en anglais) comme cela est décrit par exemple dans les demandes WO 97/36724 ou WO 99/16600, c'est le mélange-maître qui est directement malaxé et le cas échéant on incorpore les autres élastomères ou charges présents dans la composition qui ne sont pas sous la forme de mélange-maître, ainsi que les éventuels autres additifs divers autres que le système de réticulation. La phase non-productive peut être réalisée à haute température, jusqu'à une température maximale comprise entre 110°C et 200°C, de préférence entre 130°C et 185°C, pendant une durée généralement comprise entre 2 et 10 minutes.

- une seconde phase de travail mécanique (phase dite « productive »), qui est réalisée dans un mélangeur externe tel qu'un mélangeur à cylindres, après refroidissement du mélange obtenu au cours de la première phase non-productive jusqu'à une plus basse température, typiquement inférieure à 120°C, par exemple entre 40°C et 100°C.On incorpore alors le système de réticulation, et le tout est alors mélangé pendant quelques minutes, par exemple entre 5 et 15 min.

De telles phases ont été décrites par exemple dans les demandes EP-A-0501227, EP-A-0735088, EP-A-0810258, WO00/05300 ou WO00/05301.

La composition finale ainsi obtenue est ensuite calandrée par exemple sous la forme d'une feuille ou d'une plaque, notamment pour une caractérisation au laboratoire, ou encore extrudée (ou co-extrudée avec une autre composition de caoutchouc) sous la forme d'un semi-fini (ou profilé) de caoutchouc utilisable par exemple comme éléments de renforcement circonférentiels. Ces produits peuvent ensuite être utilisés pour la fabrication de pneumatiques, selon les techniques connues de l'homme du métier.

La composition peut être soit à l'état cru (avant réticulation ou vulcanisation), soit à l'état cuit (après réticulation ou vulcanisation), peut être un produit semi-fini qui peut être utilisé dans un pneumatique. La réticulation de la composition peut être conduite de manière connue de l'homme du métier, par exemple à une température comprise entre 130°C et 200°C, sous pression au sein du pneumatique.

## V- EXEMPLES

V-1 Mesures et tests utilisés

Détermination de la microstructure des élastomères

La microstructure des élastomères est déterminée par analyse RMN $^{1}$H, supplée par l'analyse RMN $^{13}$C lorsque la résolution des spectres RMN du $^{1}$H ne permet pas l'attribution et la quantification de toutes les espèces. Les mesures sont réalisées à l'aide d'un spectromètre RMN BRUKER 500MHz à des fréquences de 500.43 MHz pour l'observation du proton et 125.83MHz pour l'observation du carbone. Les mesures de RMN sont réalisées à 25°C.

Pour les élastomères non solubles mais ayant la capacité de gonfler dans un solvant, est utilisée une sonde HRMAS 4mm z-grad permettant d'observer le proton et le carbone en mode découplé du proton. Les spectres sont acquis à des vitesses de rotation de 4000Hz à 5000Hz.

Pour les mesures sur des élastomères solubles, est utilisée une sonde RMN liquide permettant d'observer le proton et le carbone en mode découplé du proton.

La préparation des échantillons non solubles est faite dans des rotors remplis avec le matériau analysé et un solvant deutéré permettant le gonflement, en général du chloroforme deutéré (CDC13). Le solvant utilisé doit toujours être deutéré et sa nature chimique peut être adaptée par l'homme du métier. Les quantités de matériau utilisées sont ajustées de façon à obtenir des spectres avec une sensibilité et une résolution suffisante.

Les échantillons solubles sont mis en solution dans un solvant deutéré (environ 25mg d'élastomère dans 1mL), en général du chloroforme deutéré (CDC13). Le solvant ou coupage de solvant utilisé doit toujours être deutéré et sa nature chimique peut être adaptée par l'homme du métier.

Dans les deux cas (échantillon soluble ou échantillon gonflé) :
Pour la RMN du proton est utilisée une séquence simple impulsion de 30°. La fenêtre spectrale est réglée pour observer l'ensemble des raies de résonances appartenant aux molécules analysées. Le nombre d'accumulation est réglé afin d'obtenir un rapport signal sur bruit suffisant pour la quantification de chaque motif. Le délai de recyclage entre chaque impulsion est adapté pour obtenir une mesure quantitative.

Pour la RMN du carbone est utilisée une séquence simple impulsion 30° avec un découplage du proton uniquement pendant l'acquisition pour éviter les effets « Overhauser Nucléaire » (NOE) et rester quantitatif. La fenêtre spectrale est réglée pour observer l'ensemble des raies de résonances appartenant aux molécules analysées. Le nombre d'accumulation est réglé afin d'obtenir un rapport signal sur bruit suffisant pour la quantification de chaque motif. Le

délai de recyclage entre chaque impulsion est adapté pour obtenir une mesure quantitative.

Propriétés dynamiques

Les propriétés dynamiques G* et tan(δ) sont mesurées sur un viscoanalyseur (Metravib VA4000), selon la norme ASTM D5992-96. On enregistre la réponse d'un échantillon de composition vulcanisée (éprouvette cylindrique de 2 mm d'épaisseur et de 79 $mm^2$ de section, soumis à une sollicitation sinusoïdale en cisaillement simple alterné, à la fréquence de 10Hz, dans les conditions normales de température (23°C) selon la norme ASTM D 1349-09. On effectue un balayage en amplitude de déformation de 0,01% à 50% (cycle aller), puis de 50% à 0,01% (cycle retour).

Les résultats exploités sont le module complexe de cisaillement dynamique G* et le facteur de perte tan(δ). Sur le cycle retour, on enregistre la valeur du G* à 5% de déformation ainsi que le facteur de perte, noté tan(δ).

Les résultats de G* et de tan(δ) à 23°C à 5% de déformation sur le cycle retour sont exprimés en performance base 100, la valeur 100 étant attribuée au témoin. Un résultat supérieur à 100 indique que la composition de l'exemple considéré est respectivement plus rigide et moins hystérétique, traduisant respectivement une meilleure rigidité pour l'application considérée et une résistance au roulement améliorée (moins élevée).

V-2 Préparation des compositions

Dans les exemples qui suivent, les compositions caoutchouteuses ont été réalisées comme décrit au point III ci-dessus. En particulier, la phase « non-productive » a été réalisée dans un mélangeur de 0,4 litres pendant 6 minutes, pour une vitesse moyenne de palettes de 50 tours par minute jusqu'à atteindre une température maximale de tombée de 160°C. La phase « productive » a été réalisée dans un outil à cylindre à 23°C pendant 10 minutes.

La réticulation de la composition a été conduite à une température comprise entre 130°C et 200°C, sous pression.

V-3 Essais de compositions de caoutchouc

Les exemples présentés ci-dessous ont pour objet de comparer le compromis de performance entre la rigidité et l'hystérèse de trois compositions conformes à la présente invention (C1 à C3) avec deux compositions témoin (T1 et T2).

La composition témoin T1 diffère de la composition C1 uniquement par la nature de l'élastomère.

La composition témoin T2 diffère de la composition C2 uniquement en ce qu'une résine plastifiante a été ajoutée, impactant le taux de dilution de la composition.

La comparaison des compositions conformes à l'invention C2 et C3 permet de d'évaluer l'impact de la fraction volumique de charge sur le compromis de performance étudié. Il peut être noté que les taux d'agent de couplage et d'agent de vulcanisation (DPG) de la composition C3 ont été adaptés au taux de silice.

Le Tableau 1 présente les compositions testées (en pce), ainsi que les résultats obtenus.

[Tableau 1]

| | **T1** | **C1** | **C2** | **C3** | **T2** |
|---|---|---|---|---|---|
| EBR(1) | - | 100 | 100 | 100 | 100 |
| SBR(2) | 100 | - | - | - | - |
| Silice(3) | 90 | 90 | 90 | 75,5 | 90 |
| Agent de couplage(4) | 7,2 | 7,2 | 7,2 | 6,2 | 7,2 |
| DPG(5) | 1,9 | 1,9 | 1,9 | 1,6 | 1,9 |
| N234(6) | 3 | 3 | 3 | 3 | 3 |
| Plastifiant liquide 1(7) | - | - | 15,2 | 15,2 | 15,2 |
| Plastifiant liquide 2(8) | 15,2 | 15,2 | - | - | - |
| Résine plastifiante(9) | - | - | - | - | 19,8 |
| Cire anti-ozone(10) | 1,5 | 1,5 | 1,5 | 1,5 | 1,5 |
| Antioxydant(11) | 2 | 2 | 2 | 2 | 2 |
| ZnO(12) | 1 | 1 | 1 | 1 | 1 |

(suite)

| | T1 | C1 | C2 | C3 | T2 |
|---|---|---|---|---|---|
| Acide stéarique | 2 | 2 | 2 | 2 | 2 |
| CBS(13) | 2 | 2 | 2 | 2 | 2 |
| Soufre | 1 | 1 | 1 | 1 | 1 |
| Fraction volumique de charge | 25% | 25% | 25% | 22% | 22% |
| Taux de dilution | 13% | 13% | 13% | 13% | 26% |
| Performance rigidité | 100 | 121 | 121 | 100 | 88 |
| Performance hystérèse | 100 | 121 | 113 | 117 | 96 |

(1) Elastomère à 79% en mole d'unité éthylène, 7% en mole d'unité 1,2-cyclohexanediyle, 8% en mole de motif 1,2 de la partie butadiénique, 6% en mole de motif 1,4 de la partie butadiénique
(2) SBR solution avec 26,5% de motif styrène et 24% de motif 1,2 de la partie butadiénique (Tg -48°C)
(3) Silice « Zeosil 1165MP » commercialisée par Solvay
(4) Silane liquide triethoxysilylpropyltetrasulfure (TESPT) « Si69 » de la société Evonik
(5) Diphénylguanidine « Perkacit DPG » de la société Flexsys
(6) Noir de carbone de grade N234 selon la norme ASTM D-1765-2017
(7) Huile MES « Catenex SNR » commercialisé par la société Shell
(8) Huile paraffinique « Tudalen 1968 » de la société Klaus Dahleke
(9) Résine d'hydrocarbure de pétrole « Escorez 5000 séries » de la société Exxon Mobil (Tg = 52°C)
(10) Cire anti-ozone « VARAZON 4959 » de la société Sasol Wax
(11) N-1,3-diméthylbutyl-N-phénylparaphénylènediamine « Santoflex 6-PPD » de la société Flexsys
(12) Oxyde de zinc de grade industriel de la société Umicore
(13) N-cyclohexyl-2-benzothiazyle sulfénamide « Santocure CBS » de la société Flexsys

Les résultats présentés dans le Tableau 1 ci-dessus montrent qu'une composition comprenant une matrice élastomère conforme à l'invention permet d'améliorer à la fois la rigidité et l'hystérèse de la composition par rapport à une composition comprenant une matrice élastomère à base de copolymère de butadiène-styrène. Cet effet a été observé uniquement lorsque le taux de dilution des compositions est inférieur à 26%. Par ailleurs, il a été constaté qu'il est possible d'améliorer davantage le compromis rigidité/hystérèse en utilisant des fractions volumiques de charge supérieur à 22%.

## Revendications

**1.** Pneumatique (1), ayant un côté extérieur (E) et un côté intérieur (I), ledit pneumatique comprenant une armature de sommet (6) et une bande de roulement (5) radialement extérieure, ladite bande de roulement (5) comprenant une pluralité de blocs (51) de sculpture orientés au moins en partie circonférentiellement et une pluralité de rainures (71, 72, 73, 74) s'étendant au moins en partie circonférentiellement, chaque rainure circonférentielle (71, 72, 73, 74) étant délimitée par une face latérale axialement interne (7i), par une face latérale axialement externe (7e) et par un fond (7b) de rainure, au moins un desdits blocs de sculpture (51) comportant au moins un élément de renforcement circonférentiel (52) constitué d'une composition ayant un module dynamique de cisaillement G* au moins deux fois supérieur au module dynamique de cisaillement G* de la composition du reste des blocs de la bande de roulement, l'élément de renforcement circonférentiel (52) ayant une largeur axiale qui diminue progressivement en se déplaçant radialement vers l'extérieur, ladite largeur axiale ayant une valeur maximale (520) inférieure à 40% de la largeur axiale (510) dudit bloc,

**caractérisé en ce que** la composition dudit élément de renforcement circonférentiel (52) est à base d'au moins :

- plus de 50 pce d'un copolymère d'éthylène et d'un 1,3-diène, les unités éthylène dans le copolymère représentant plus de 50% en mole des unités monomères du copolymère,
- une charge renforçante, et
- un système de réticulation,

et présente un taux de dilution, défini comme étant le rapport de la masse de l'ensemble des plastifiants de la composition sur la somme des masses de l'ensemble des plastifiants de la composition et de l'ensemble des élastomères de la composition, inférieur ou égal à 25%.

**2.** Pneumatique selon l'une quelconque des revendications précédentes, dans lequel ledit élément de renforcement circonférentiel (52) s'étend radialement sur une hauteur « h » correspondant de 50% à 100%, de préférence de 50% à 75%, de l'épaisseur « p » de la bande de roulement.

**3.** Pneumatique selon l'une quelconque des revendications précédentes, dans lequel ledit élément de renforcement circonférentiel (52) forme au moins en partie la face latérale axialement interne (7i) ou la face latérale axialement externe (7e) dudit au moins un desdits blocs de sculpture (51).

**4.** Pneumatique selon l'une quelconque des revendications précédentes, dans lequel les unités éthylène dans le copolymère représentent entre 50% et 95% en mole des unités monomères du copolymère.

**5.** Pneumatique selon l'une quelconque des revendications précédentes, dans lequel le 1,3-diène est le 1,3-butadiène.

**6.** Pneumatique selon l'une quelconque des revendications précédentes, dans lequel le copolymère est un copolymère statistique.

**7.** Pneumatique selon l'une quelconque des revendications précédentes, dans lequel le taux du copolymère d'éthylène et de 1,3-diène dans la composition de l'élément de renforcement circonférentiel (52) est compris dans un domaine allant de 60 à 100 pce, de préférence de 80 à 100 pce.

**8.** Pneumatique selon l'une quelconque des revendications précédentes, dans lequel la charge renforçante comprend majoritairement de la silice.

**9.** Pneumatique selon l'une quelconque des revendications précédentes, dans lequel le taux de charge renforçante dans la composition dudit élément de renforcement circonférentiel (52) est compris dans un domaine allant de 70 à 120 pce, de préférence de 80 à 110 pce.

**10.** Pneumatique selon l'une quelconque des revendications précédentes, dans lequel la fraction volumique de charge renforçante dans la composition dudit élément de renforcement circonférentiel (52) est supérieure ou égale à 23%, de préférence comprise entre 23% et 33%, de préférence entre 25% et 31%.

**11.** Pneumatique selon l'une quelconque des revendications précédentes, dans lequel la composition dudit élément de renforcement circonférentiel (52) ne comprend pas d'huile plastifiante liquide à 20°C ou en comprend moins de 33 pce, de préférence moins de 15 pce.

**12.** Pneumatique selon la revendication 11, dans lequel l'huile plastifiante liquide à 20°C est choisie dans le groupe constitué par les huiles naphténiques, les huiles paraffiniques, les huiles MES (Medium Extracted Solvates), les huiles TDAE (Treated Distillate Aromatic Extracts), les huiles RAE (Residual Aromatic Extract oils), les huiles TRAE (Treated Residual Aromatic Extract) et les huiles SRAE (Safety Residual Aromatic Extract oils), les huiles minérales, les huiles végétales, les plastifiants éthers, les plastifiants esters, les plastifiants phosphates, les plastifiants sulfonates et leurs mélanges.

**13.** Pneumatique selon l'une quelconque des revendications précédentes, dans lequel le taux de dilution de la composition dudit élément de renforcement circonférentiel (52) est compris dans un domaine allant de 0% à 25% de préférence de 4% à 15%.

**14.** Pneumatique selon l'une quelconque des revendications précédentes, dans lequel la composition de l'élément de renforcement circonférentiel (52) ne comprend pas de résine renforçante.

**15.** Pneumatique selon l'une quelconque des revendications précédentes, dans lequel la composition du reste de la bande de roulement a un module dynamique de cisaillement G* mesuré à 60°C à 10 Hz et sous une contrainte de cisaillement alternée de 0,7 Mpa inférieur ou égal à 1,3 Mpa, de préférence inférieur à 1,1 Mpa.

**Patentansprüche**

1. Reifen (1) mit einer Außenseite (E) und einer Innenseite (I), wobei der Reifen eine Scheitelbewehrung (6) und einen radial äußeren Laufstreifen (5) umfasst, wobei der Laufstreifen (5) mehrere Profilblöcke (51), die wenigstens teilweise in Umfangsrichtung ausgerichtet sind, und mehrere Rillen (71, 72, 73, 74), die sich wenigstens teilweise in Umfangsrichtung erstrecken, umfasst, wobei jede Umfangsrille (71, 72, 73, 74) von einer axial inneren Seitenfläche (7i), von einer axial äußeren Seitenfläche (7e) und von einem Rillenboden (7b) begrenzt wird, wobei wenigstens einer der Profilblöcke (51) wenigstens ein Umfangsverstärkungselement (52) aufweist, das aus einer Zusammensetzung mit einem dynamischen Schubmodul G* besteht, der wenigstens zweimal so groß wie der dynamische Schubmodul G* der Zusammensetzung des Restes der Blöcke des Laufstreifens ist, wobei das Umfangsverstärkungselement (52) eine axiale Breite aufweist, welche sich radial nach außen hin allmählich verringert, wobei die axiale Breite einen maximalen Wert (520) hat, der kleiner als 40 % der axialen Breite (510) des Blockes ist,

   **dadurch gekennzeichnet, dass** die Zusammensetzung des Umfangsverstärkungselements (52) auf wenigstens

   - über 50 pce (Gewichtsteile auf 100 Gewichtsteile Elastomer) eines Ethylencopolymers und eines 1,3-Diens, wobei die Ethyleneinheiten im Copolymer über 50 Mol-% der monomeren Einheiten des Copolymers darstellen,
   - einem verstärkenden Füllstoff und
   - einem Vernetzungssystem

   basiert und ein Verdünnungsverhältnis, definiert als das Verhältnis der Masse der Gesamtheit der Weichmacher der Zusammensetzung zur Summe der Massen der Gesamtheit der Weichmacher der Zusammensetzung und der Gesamtheit der Elastomere der Zusammensetzung, aufweist, das kleiner oder gleich 25 % ist.

2. Reifen nach einem der vorhergehenden Ansprüche, wobei sich das Umfangsverstärkungselement (52) radial über eine Höhe "h" erstreckt, die 50 % bis 100 %, vorzugsweise 50 % bis 75 %, der Dicke "p" des Laufstreifens entspricht.

3. Reifen nach einem der vorhergehenden Ansprüche, wobei das Umfangsverstärkungselement (52) wenigstens teilweise die axial innere Seitenfläche (7i) oder die axial äußere Seitenfläche (7e) des wenigstens einen der Profilblöcke (51) bildet.

4. Reifen nach einem der vorhergehenden Ansprüche, wobei die Ethyleneinheiten im Copolymer zwischen 50 und 95 Mol-% der monomeren Einheiten des Copolymers darstellen.

5. Reifen nach einem der vorhergehenden Ansprüche, wobei das 1,3-Dien 1,3-Butadien ist.

6. Reifen nach einem der vorhergehenden Ansprüche, wobei das Copolymer ein statistisches Copolymer ist.

7. Reifen nach einem der vorhergehenden Ansprüche, wobei der Anteil des Ethylencopolymers und des 1,3-Diens in der Zusammensetzung des Umfangsverstärkungselements (52) in einem Bereich von 60 bis 100 pce, vorzugsweise von 80 bis 100 pce liegt.

8. Reifen nach einem der vorhergehenden Ansprüche, wobei der verstärkende Füllstoff überwiegend Siliciumdioxid umfasst.

9. Reifen nach einem der vorhergehenden Ansprüche, wobei der Anteil von verstärkendem Füllstoff in der Zusammensetzung des Umfangsverstärkungselements (52) in einem Bereich von 70 bis 120 pce, vorzugsweise von 80 bis 110 pce liegt.

10. Reifen nach einem der vorhergehenden Ansprüche, wobei der Volumenanteil von verstärkendem Füllstoff in der Zusammensetzung des Umfangsverstärkungselements (52) größer oder gleich 23 % ist und vorzugsweise zwischen 23 % und 33 %, vorzugsweise zwischen 25 % und 31 % liegt.

11. Reifen nach einem der vorhergehenden Ansprüche, wobei die Zusammensetzung des Umfangsverstärkungselements (52) kein bei 20 °C flüssiges Weichmacheröl umfasst oder weniger als 33 pce, vorzugsweise weniger als 15 pce davon umfasst.

**12.** Reifen nach Anspruch 11, wobei das bei 20 °C flüssige Weichmacheröl aus der Gruppe gewählt ist, die aus den naphthenischen Ölen, den paraffinischen Ölen, den MES-Ölen (Medium Extracted Solvates), den TDAE-Ölen (Treated Distillate Aromatic Extracts), den RAE-Ölen (Residual Aromatic Extract), den TRAE-Ölen (Treated Residual Aromatic Extract) und den SRAE-Ölen (Safety Residual Aromatic Extract), den Mineralölen, den Pflanzenölen, den Etherweichmachern, den Esterweichmachern, den Phosphatweichmachern, den Sulfonatweichmachern und deren Mischungen besteht.

**13.** Reifen nach einem der vorhergehenden Ansprüche, wobei das Verdünnungsverhältnis der Zusammensetzung des Umfangsverstärkungselements (52) in einem Bereich von 0 % bis 25 %, vorzugsweise von 4 % bis 15 % liegt.

**14.** Reifen nach einem der vorhergehenden Ansprüche, wobei die Zusammensetzung des Umfangsverstärkungselements (52) kein Verstärkungsharz umfasst.

**15.** Reifen nach einem der vorhergehenden Ansprüche, wobei die Zusammensetzung des Restes des Laufstreifens einen dynamischen Schubmodul G* aufweist, gemessen bei 60 °C bei 10 Hz und unter einer wechselnden Schubbeanspruchung von 0,7 MPa, der kleiner oder gleich 1,3 MPa und vorzugsweise kleiner als 1,1 MPa ist.

## Claims

**1.** Tyre (1), having an exterior side (E) and an interior side (I), said tyre comprising a crown reinforcement (6) and a tread (5) radially on the outside, said tread (5) comprising a plurality of tread pattern blocks (51) oriented at least partially circumferentially and a plurality of grooves (71, 72, 73, 74) extending at least partially circumferentially, each circumferential groove (71, 72, 73, 74) being delimited by an axially internal lateral face (7i), by an axially external lateral face (7e) and by a groove bottom (7b), at least one of said tread pattern blocks (51) comprising at least one circumferential reinforcing element (52) consisting of a composition having a dynamic shear modulus G* at least twice as high as the dynamic shear modulus G* of the composition of the rest of the blocks of the tread, the circumferential reinforcing element (52) having an axial width which decreases progressively with increasing radial proximity to the outside, said axial width having a maximum value (520) less than 40% of the axial width (510) of said block,

**characterized in that** the composition of said circumferential reinforcing element (52) is based on at least:

- more than 50 phr of a copolymer of ethylene and a 1,3-diene, the ethylene units in the copolymer representing more than 50 mol% of the monomer units of the copolymer,
- a reinforcing filler, and
- a crosslinking system,

and has a dilution ratio, defined as being the ratio of the weight of all the plasticizers of the composition to the sum of the weights of all the plasticizers of the composition and all the elastomers of the composition, of less than or equal to 25%.

**2.** Tyre according to any one of the preceding claims, in which said circumferential reinforcing element (52) extends radially over a height "h" corresponding to from 50% to 100%, preferably from 50% to 75%, of the thickness "p" of the tread.

**3.** Tyre according to either one of the preceding claims, in which said circumferential reinforcing element (52) at least partially forms the axially internal lateral face (7i) or the axially external lateral face (7e) of said at least one of said tread pattern blocks (51) .

**4.** Tyre according to any one of the preceding claims, in which the ethylene units in the copolymer represent between 50 mol% and 95 mol% of the monomer units of the copolymer.

**5.** Tyre according to any one of the preceding claims, in which the 1,3-diene is 1,3-butadiene.

**6.** Tyre according to any one of the preceding claims, in which the copolymer is a random copolymer.

**7.** Tyre according to any one of the preceding claims, in which the content of the copolymer of ethylene and 1,3-diene

in the composition of the circumferential reinforcing element (52) is within a range extending from 60 to 100 phr, preferably from 80 to 100 phr.

**8.** Tyre according to any one of the preceding claims, in which the reinforcing filler predominantly comprises silica.

**9.** Tyre according to any one of the preceding claims, in which the content of reinforcing filler in the composition of said circumferential reinforcing element (52) is within a range extending from 70 to 120 phr, preferably from 80 to 110 phr.

**10.** Tyre according to any one of the preceding claims, in which the volume fraction of reinforcing filler in the composition of said circumferential reinforcing element (52) is greater than or equal to 23%, preferably between 23% and 33%, preferably between 25% and 31%.

**11.** Tyre according to any one of the preceding claims, in which the composition of said circumferential reinforcing element (52) does not comprise any plasticizing oil which is liquid at 20°C or comprises less than 33 phr, preferably less than 15 phr, thereof.

**12.** Tyre according to Claim 11, in which the plasticizing oil which is liquid at 20°C is selected from the group consisting of naphthenic oils, paraffinic oils, MES (Medium Extracted Solvates) oils, TDAE (Treated Distillate Aromatic Extracts) oils, RAE (Residual Aromatic Extracts) oils, TRAE (Treated Residual Aromatic Extracts) oils and SRAE (Safety Residual Aromatic Extracts) oils, mineral oils, vegetable oils, ether plasticizers, ester plasticizers, phosphate plasticizers, sulfonate plasticizers and mixtures thereof.

**13.** Tyre according to any one of the preceding claims, in which the dilution ratio of the composition of said circumferential reinforcing element (52) is within a range extending from 0% to 25%, preferably from 4% to 15%.

**14.** Tyre according to any one of the preceding claims, in which the composition of the circumferential reinforcing element (52) does not comprise any reinforcing resin.

**15.** Tyre according to any one of the preceding claims, in which the composition of the rest of the tread has a dynamic shear modulus G*, measured at 60°C at 10 Hz and under an alternating shear stress of 0.7 MPa, of less than or equal to 1.3 MPa, preferably less than 1.1 MPa.

[Fig 1]

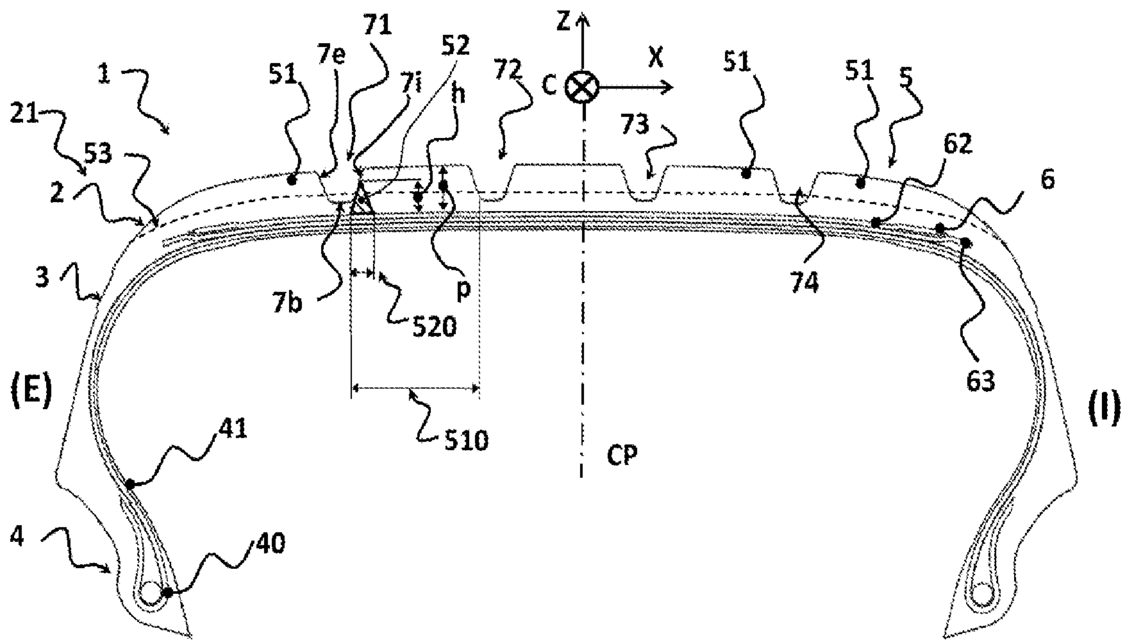
1
21
53
2
3
51
7e
71
7i
52
h
72
C
Z
X
51
73
51
5
62
6
7b
520
p
510
74
63
CP
(E)
(I)
41
4
40

[Fig 2]

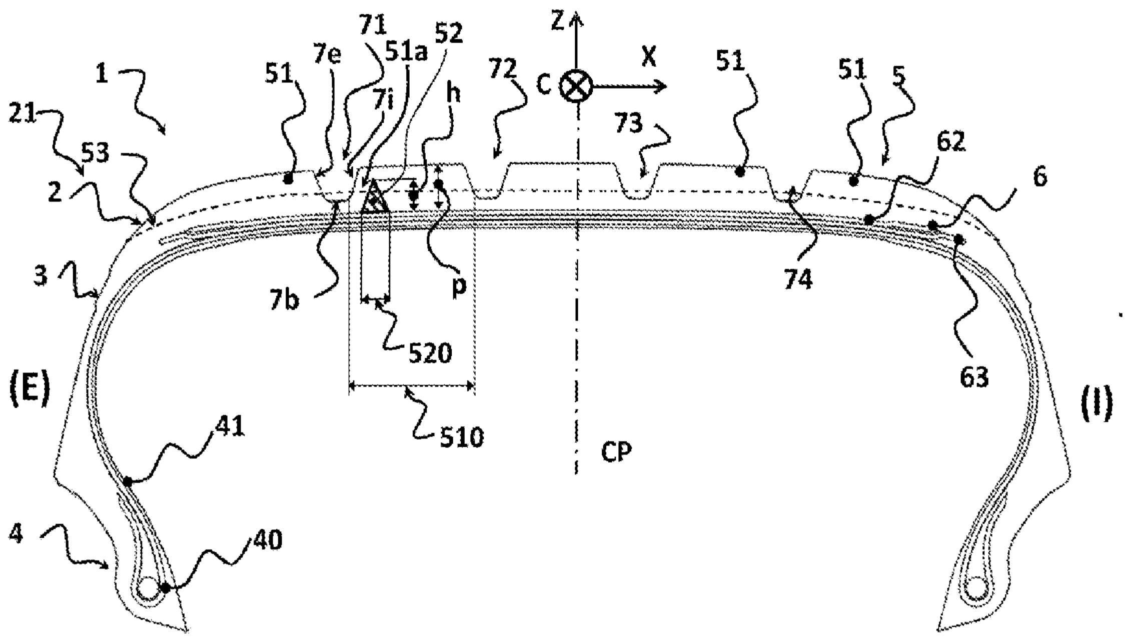
1
21
53
2
3
51
7e
71
51a
7i
52
h
72
C
Z
X
51
73
51
5
62
6
7b
520
p
510
74
63
CP
(E)
(I)
41
4
40

[Fig 3]

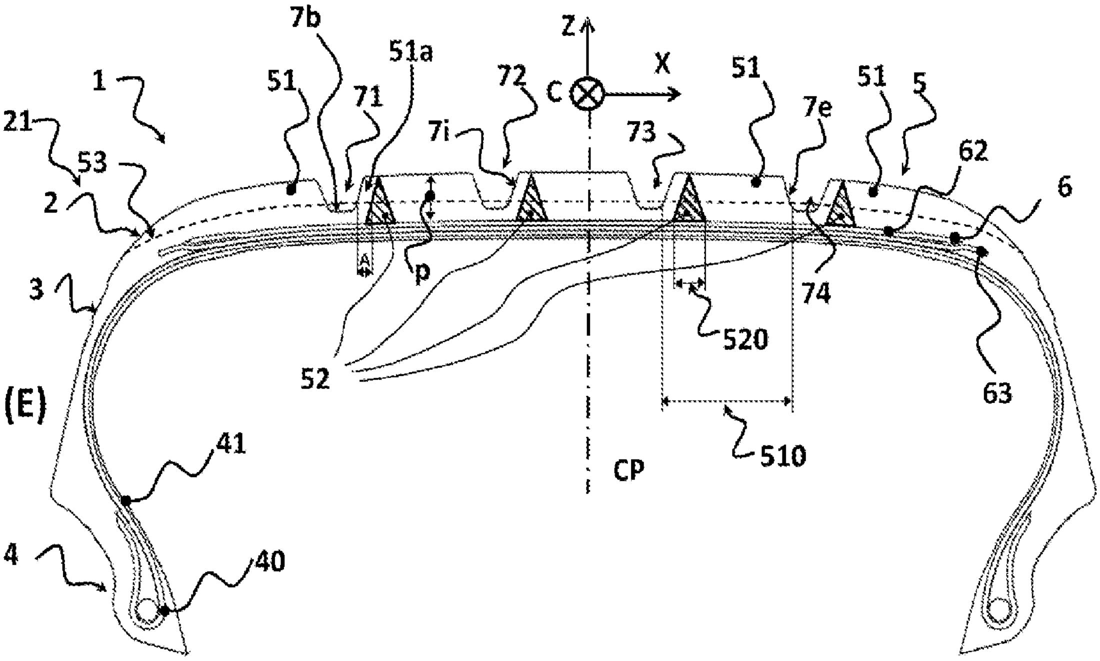
7b
51a
Z
X
C
1
51
71
72
51
51
5
21
7i
7e
53
73
62
2
6
3
p
52
74
520
63
(E)
(I)
510
41
CP
4
40

[Fig 4]

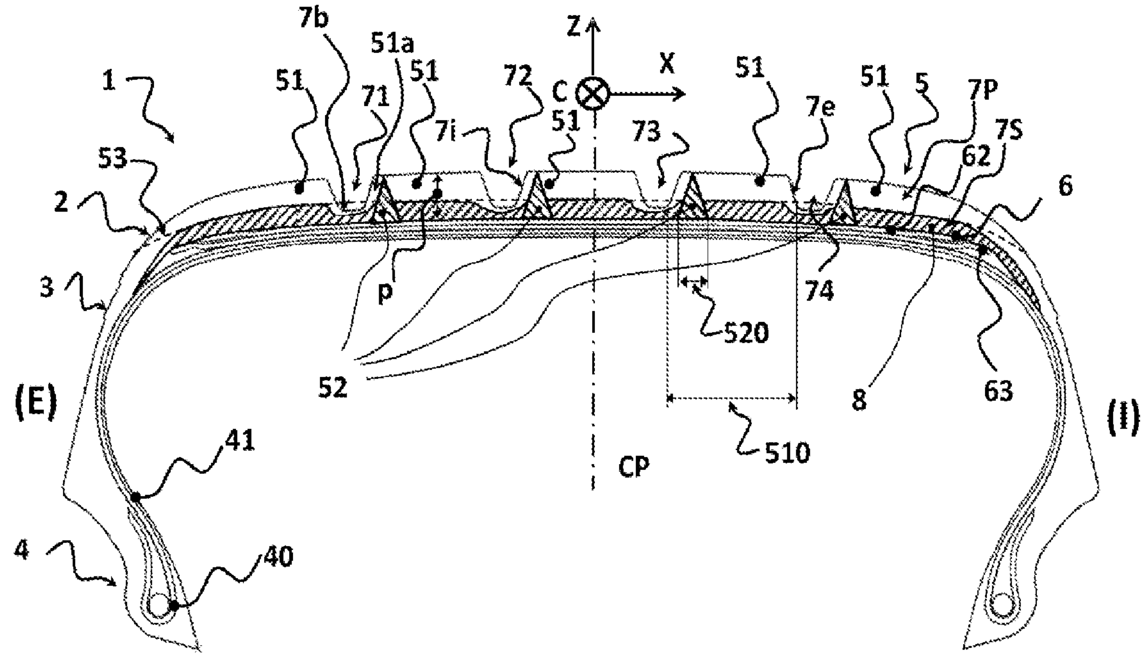
7b
Z
51a
X
1
51
51
72
51
51
5
7P
71
C
7e
7S
7i
51
73
53
62
6
2
3
p
74
520
52
8
63
(E)
(I)
510
41
CP
4
40

[Fig 5]

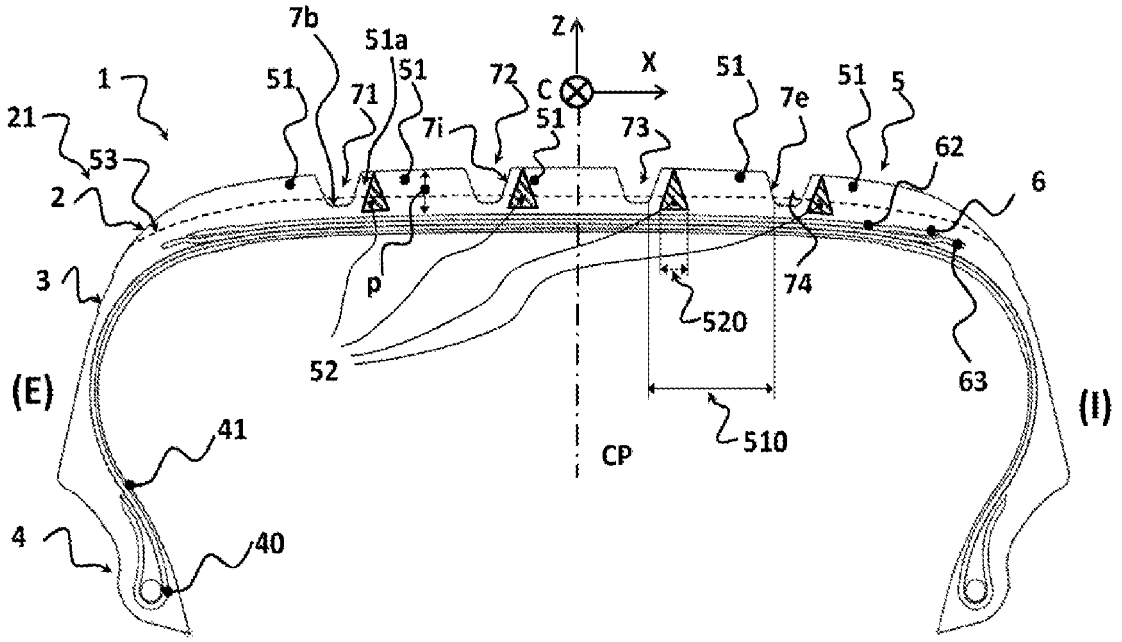
7b
51a
51
72
Z
C
X
51
7e
51
5
1
21
53
2
51
71
7i
51
73
62
6
p
3
74
520
52
63
(E)
(I)
510
41
CP
4
40

[Fig 6]

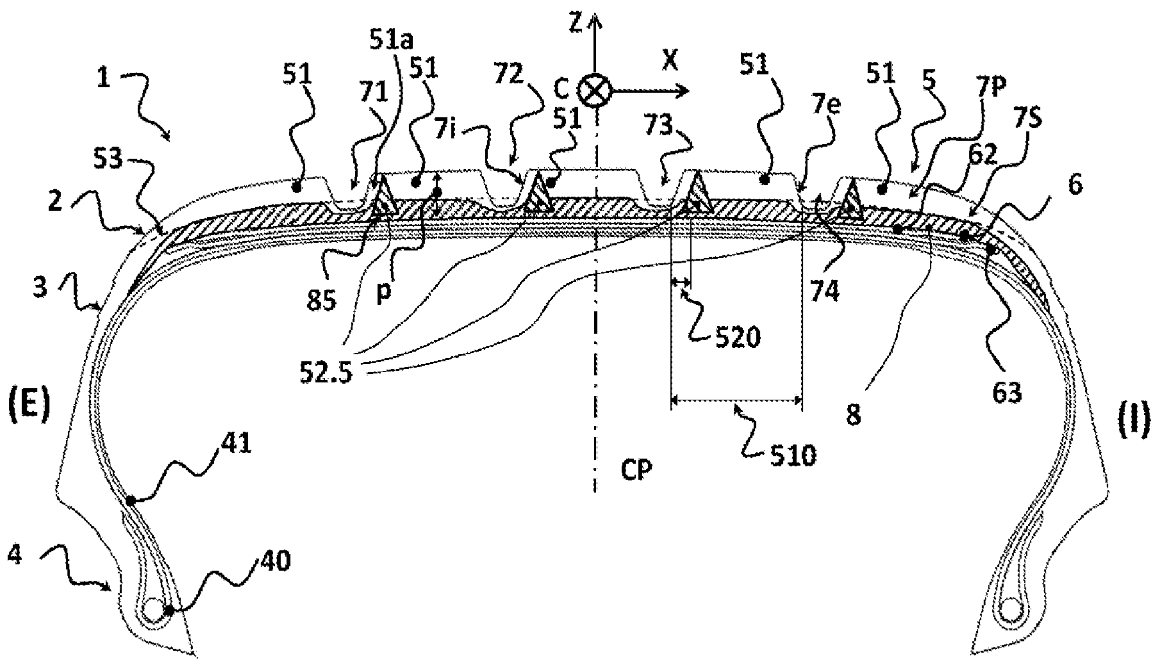
Z
51a
1
51
71
51
72
C
X
51
51
5
7P
7S
7i
51
73
7e
62
6
53
2
3
85
p
74
520
52.5
63
8
(E)
(I)
510
CP
41
4
40

[Fig 7]

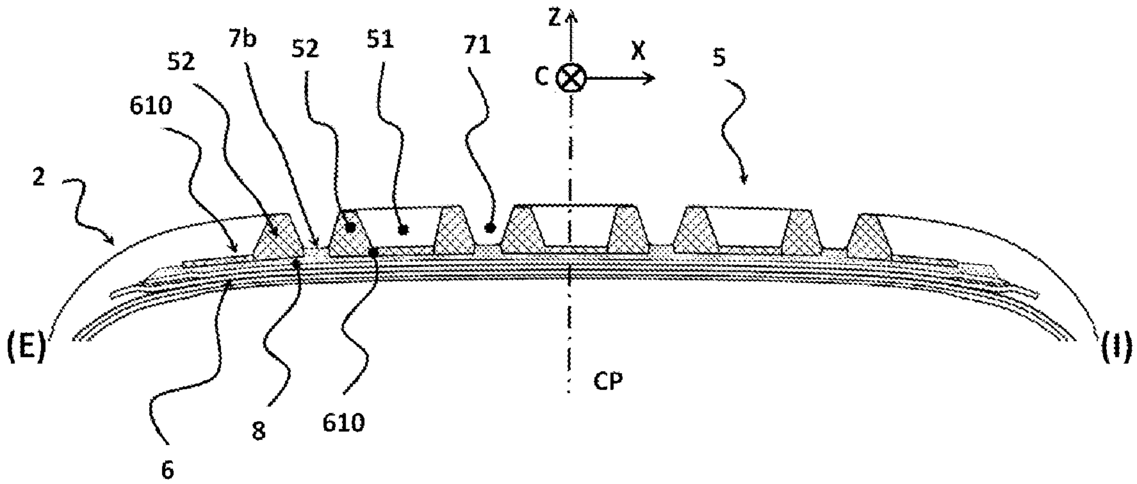
Z
X
C
5
71
51
52
7b
52
610
2
(E)
(I)
CP
6
8
610

[Fig 8]

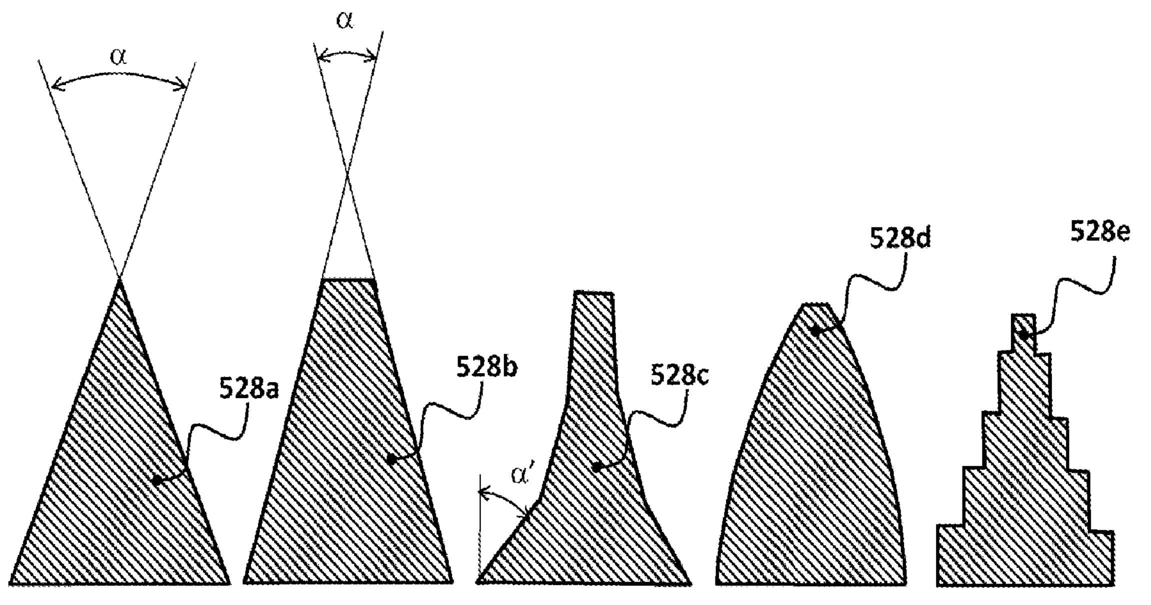
α
α
α'
528a
528b
528c
528d
528e

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- FR 2954333
- FR 3010002
- FR 3043017
- WO 2016174100 A
- WO 2019016440 A
- WO 2018002487 A
- EP 1092731 A
- WO 2004035639 A
- WO 2007054223 A
- WO 2007054224 A
- WO 2017093654 A1
- WO 2018020122 A1
- WO 2018020123 A1
- WO 03016215 A1
- WO 03016387 A1
- WO 9736724 A2
- WO 9916600 A1
- WO 0210269 A
- WO 9736724 A
- WO 9916600 A
- EP 0501227 A
- EP 0735088 A
- EP 0810258 A
- WO 0005300 A
- WO 0005301 A